# EUROPEAN PATENT SPECIFICATION

(11) **EP 2 829 850 B1**
(45) Date of publication and mention of the grant of the patent: **27.03.2019**
(21) Application number: 14169662.5
(22) Date of filing: 23.05.2014
(51) Int. Cl.: G01F 3/14, G01F 3/18

(54) **Flowmeter**
Durchflussmesser
Débitmètre

(30) Priority: 26.07.2013 JP 2013155381
(43) Date of publication of application: 28.01.2015
(73) Proprietor: Tatsuno Corporation, Tokyo 108-0073 (JP)
(72) Inventor: Omori, Kento, Tokyo, 108-0073 (JP); Kokura, Naohiro, Tokyo, 108-0073 (JP)
(74) Representative: Isarpatent

(56) References cited:
- CA-A- 405 314
- US-A- 1 644 868
- US-A- 5 094 106
- US-A- 5 811 676

## Description

### BACKGROUND OF THE INVENTION

### Field of the Invention

The present invention relates to a flowmeter used for ground-based oil filling devices placed in oil filling stations and so on, in particular to a flowmeter with the features of the preamble of patent claim 1, as disclosed in US 5 811 676 A.

### Description of the Related Art

In a ground-based oil filling device placed in oil filling stations has been stored in its case an oil filling pump, an oil filling motor, a flowmeter and others to construct an oil filling system. For this oil filling device, a flowmeter that can be mounted in a variety of directions has been desired to correspond to conditions that filling devices are installed in foreign countries, or to improve flexibility in layout. Then, for example, the present applicant proposed a downsized oil filling device with low pressure loss (refer to Japanese Patent Publication NO. 2012-158377 gazette).

The conventional art is effective. But, fuel oil is measured in a cylinder chamber of a flowmeter, and is pressed out in a horizontal direction from a slide valve to a discharge area, so that there is a possibility that an air containing portion is generated in an upper portion of the discharge area in the flowmeter. Then, when the air containing portion exists in the upper portion of the discharge area, circulating quantity at the first flow of fuel oil becomes large, so that it takes long time for default setting. In addition, the existence of the air containing portion in the flowmeter may cause, at the next driving of the oil filling pump, compressed air is measured and displayed in a display in spite of before filling.

### SUMMARY OF THE INVENTION

### 1. Problems to be solved by the Invention

The present invention has been made in consideration of the above problems in the conventional art, and the object thereof is to provide a flowmeter from which air is easily released and in which circulating quantity at the first flow of fuel oil can be reduced.

### 2. Means of Solving the Problems

A flowmeter of this invention is characterized by the features of claim 1.

With this flowmeter, since the flow channel member is disposed between the discharge area that is formed in the main body casing and the discharge port, an air containing portion generated in an upper portion of the discharge area in the main body casing and the discharge port communicate with each other via the flow channel member, so that an air in the air containing portion can be released from the discharge port via the flow channel member. Here, the discharge area is an area where the fuel oil measured in the cylinder chamber of the flowmeter flows, so that even though the flow channel member is disposed, which does not affect the measurement in the cylinder chamber of the flowmeter. That is, there is no possibility that mounting the flow channel member causes a drop in measuring accuracy.

In the flowmeter, an inlet of the flow channel member is formed at an upper portion in the main body casing, and an outlet of the flow channel member is formed at a position of the discharge port.

In the flowmeter, when in an upper portion in the main body casing, that is, at a position of an upper area of the discharge area is formed the inlet, and at a position of the discharge port is formed the outlet, the pressure in the discharge area of the flowmeter is higher than that in the discharge port, so that the pressure on the inlet side of the flow channel member becomes higher than that on the outlet side. Then, this difference in pressure, which is a difference between the pressure in the discharge area of the flowmeter and that in the discharge port, or a difference between the pressure on the inlet side and that on the outlet side of the flow channel member allows an air in the air containing portion existing in the upper area in the discharge area of the flowmeter to be discharged to the discharge port.

Further, in the flowmeter, the outlet of the flow channel member can be formed in a tapered shape.

Forming the outlet of the flow channel member in a tapered shape prevents a stream of the fuel oil from separating in an area downstream of the outlet, which prevents a difference in pressure between the area downstream of the outlet and the discharge area from decreasing due to the separation. As a result, the air in the air containing portion can smoothly be discharged.

In addition, it is possible to construct the flowmeter such that the first channel communicating the first inlet and the outlet and the third channel communicating the third inlet and the outlet extend in a circular arc shape along an outer edge part of the flow channel member, and the second channel communicating the second inlet and the outlet is provided with an area extending from the second inlet in a circular arc shape along an outer edge part of the flow channel member, an inner area extending in a radial direction and an area extending in a circular arc shape in an inner area, in a radial direction, of the first channel or the third channel.

It is difficult for the air containing portion in the discharge area to generate when the discharge port of the flowmeter directs upward, and the air containing portion easily generates when the discharge port directs a horizontal direction (rightward or leftward) and downward. Therefore, when the air containing portion is easily generated in the discharge area, three patterns of relative positional relation between the air containing portion of the discharge area and the discharge port of the flowmeter exist, which are the discharge port is positioned rightward, leftward and downward in relation to the air containing portion.

In this invention, since the flow channel member is formed to be annular, and the above first to third inlets and the first to third channels are provided, even if the relative positional relation of the air containing portion in the discharge area and the discharge port of the flowmeter are any one of the above three patterns, any one of the first to third inlets communicates the air containing portion, and through any one of the first to third channels is discharged the air in the air containing portion on the discharge port side of the flowmeter. As a result, regardless of the layout of the discharge port of the flowmeter, mounting the above single flow channel member allows the air in the air containing portion to be released.

### Effects of the Invention

As described above, with the present invention, it is possible to provide a flowmeter from which air is released with ease, and in which circulating quantity at the first flow of fuel oil can be decreased.

### BRIEF DESCRIPTION OF THE DRAWINGS

FIG. 1 is a cross-sectional view showing a flowmeter according to an embodiment of the present invention;
FIG. 2 is a perspective view showing a flow channel member used in the embodiment;
FIG. 3 is a perspective view showing a channel main body of the flow channel member;
FIG. 4 is a perspective view showing a lid plate of the flow channel member;
FIG. 5 is a partially enlarged cross-sectional view showing a condition that the flow channel member is mounted to the flowmeter;
FIG. 6 is a drawing for explaining an operation and effect when the discharge port directs rightward;
FIG. 7 is a drawing for explaining an operation and effect when the discharge port directs downward; and
FIG. 8 is a drawing for explaining an operation and effect when the discharge port directs leftward.

### DESCRIPTION OF THE EMBODIMENTS

Hereinafter, embodiments will be explained with reference to attached drawings.

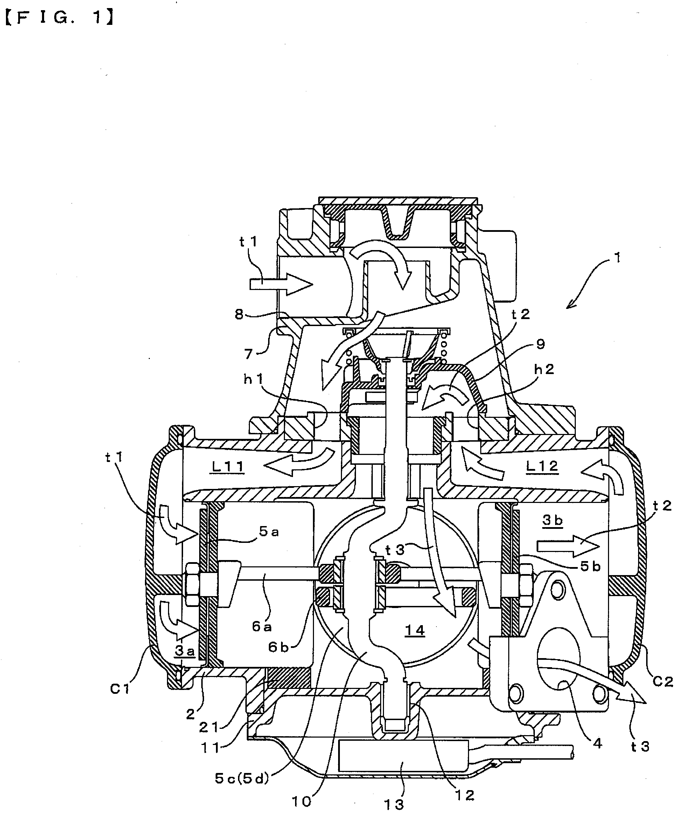

In FIG. 1, a flowmeter according to an embodiment of the present invention is shown with reference numeral 1 as a whole. The flowmeter 1 is provided with a main body casing 2, and in the main body casing 2 is formed a cylinder chambers 3 (3a, 3b...) in a cross form. In FIG. 1, only cylinder chambers 3a, 3b are shown, and cylinder chambers not shown are disposed in a direction perpendicular to a paper plane of FIG. 1. Meanwhile, there are cases when the cylinder chambers are comprehensively shown with reference numeral 3.

In the cylinder chamber 3a, 3b are disposed pistons 5. In FIG. 1, only pistons 5a, 5b are shown, and pistons not shown are disposed in a direction perpendicular to a paper plane of FIG. 1. In this specification and drawings, there are cases when the pistons are comprehensively shown with reference numeral 5.

The pistons 5 opposing with each other in the cylinder chambers 3 are connected with piston rods 6 (6a, 6b). In FIG. 1, pistons 5a, 5b are connected with the piston rod 6a, and the piston rod 6b connects two pistons not shown, which are disposed in a direction perpendicular to a paper plane of FIG. 1, with each other.

On a side face of the main body casing 2 is formed a discharge port 4. And, in an upper portion in FIG. 1, the main body casing 2 is provided with an inlet casing 7. On the inlet casing 7 is formed an inlet 8, and in the inlet casing 7 is mounted a slide valve 9. The slide valve 9 is constructed so as to be rotated by a crank shaft 10. The crank shaft 10 engages with the piston rods 6 (6a, 6b), and linear reciprocation of the piston rods 6 rotates the crank shaft 10 and then the slide valve 9 rotates.

The main body casing 2 is, as shown in a lower portion of FIG. 1, provided with a lid 11. The lid 11 is provided with a bearing 12 for the crank shaft 10 and a sensor 13 for detecting rotation amount of the crank shaft 10. A portion enclosed by each piston 5 and the lid 11 is constructed to be a discharge area 14, and on the lid 11 side of the discharge area 14 (the lower portion in FIG. 1) is provided a flow channel member 21. Then, the discharge area 14 is in communication with the discharge port 4. In the main body casing 2, on both left and right sides in FIG. 1 are lids C1, C2, and in the main body casing 2 are formed channels L11, L12.

In a condition shown in FIG. 1, a fuel oil flowing into the inlet 8 (shown by an arrow t1) flows into the cylinder chamber 3a through a through hole h1 on an open side (left side in FIG. 1) of the slide valve 9, the channel L11 and an inner space in the lid C1. The pressure of a fuel oil flowing into the cylinder chamber 3a causes the piston 5a to be pressed on the right side in FIG. 1, and the piston rod 6a and the piston 5b move (slide) on the right side in FIG. 1. Moving the piston rod 6a and the piston 5b on the right side in FIG. 1 allows a fuel oil in the cylinder chamber 3b to be pressed (shown by an arrow t2), and the fuel oil flows and passes a space in the slide valve 9 through an inner space of the lid C2 and the channel L12. After that, as shown by an arrow t3, the fuel oil is discharged from the discharge port 4 via the discharge area 14.

A fuel oil flowing out of the discharge port 4 is supplied from a fueling nozzle not shown to a fuel tank of a vehicle or the like not shown through a fueling pipe and a fueling hose not shown. Here, the moving of the piston rod 6a allows the crank shaft 10 to rotate, and the slide valve 9 rotates to change opening side. In addition, the rotation of the crank shaft 10 is detected by the sensor 13; a detective signal of the sensor 13 is transmitted to a fueling control device not shown; and fuel quantity is calculated and is displayed on a display not shown.

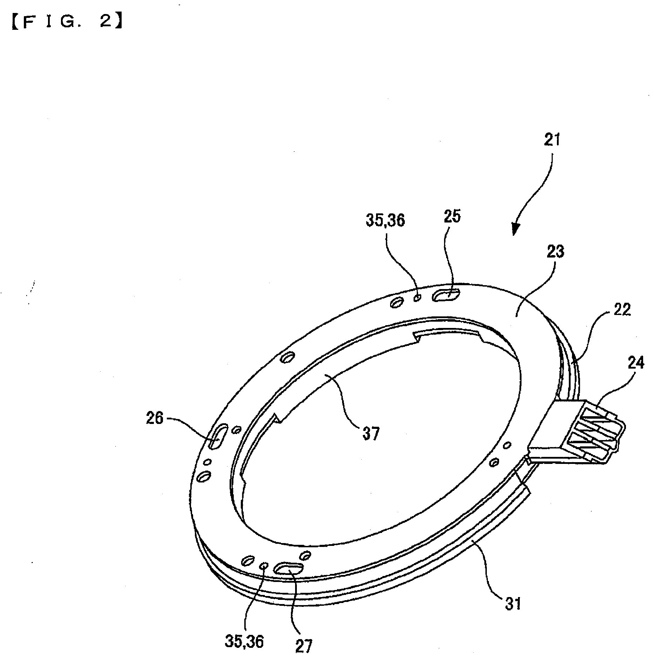

In FIG. 1, in an area between the discharge area 14 and the discharge port 4 (the lower area in FIG. 1) is disposed the flow channel member 21. On the flow channel member 21 will be made an explanation with reference to FIGs. 2 to 5. The flow channel member 21 is made of resinic material for instance.

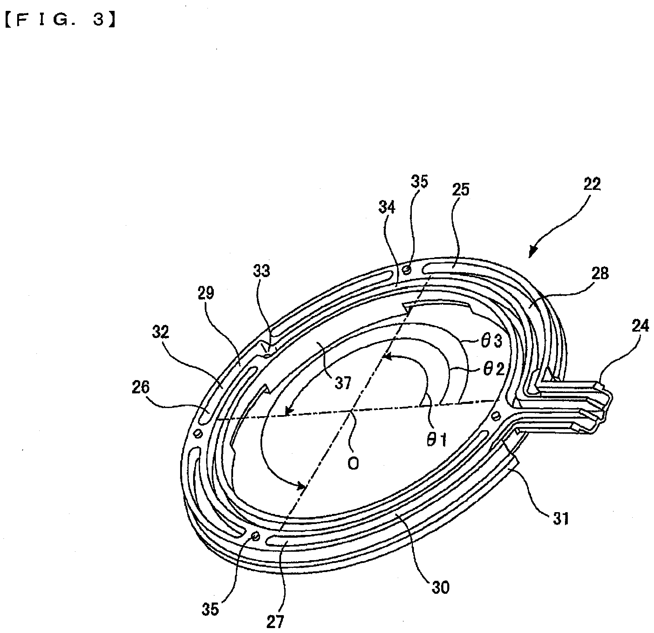

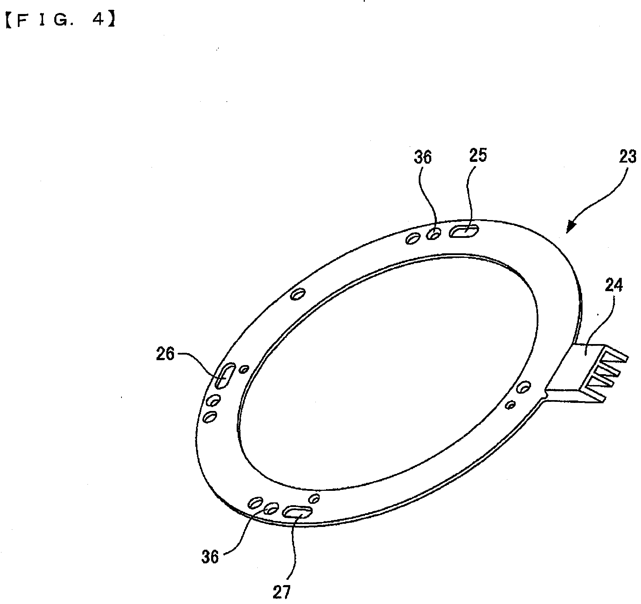

As shown in FIGs. 2 to 4, the flow channel member 21 is formed to be annular as a whole, and is provided with the channel main body 22 and the lid plate 23, and the lid plate 23 is fixed to the channel main body 22. On the channel main body 22 is formed an outlet 24. And, on the flow channel member 21 is formed a first inlet 25, a second inlet 26 and a third inlet 27. As shown in FIGs. 3 and 4, the outlet 24, the first inlet 25, the second inlet 26 and the third inlet 27 are formed on the channel main body 22 and the lid plate 23, respectively.

In FIG. 3, when a virtual center point of the channel main body 22 is indicated by the reference O, the outlet 24, the virtual center point O and the first inlet 25 form a center angle θ1, and the center angle θ1 is 90° counterclockwise. In other words, the first inlet 25 is disposed at a position where the center angle θ1 becomes 90° in relation to the outlet 24 counterclockwise.

And, the outlet 24, the virtual center point O and the second inlet 26 form a center angle θ2, and the center angle θ2 is 180° counterclockwise. In other words, the second inlet 26 is disposed at a position where the center angle θ2 becomes 180° in relation to the outlet 24 counterclockwise.

Further, the outlet 24, the virtual center point O and the third inlet 27 form a center angle θ3, and the center angle θ3 is 270° counterclockwise. In other words, the third inlet 27 is disposed at a position where the center angle θ3 becomes 270° in relation to the outlet 24 counterclockwise.

As shown in FIG. 3, the first inlet 25 and the outlet 24 are in communication with each other through the first channel 28. The second inlet 26 and the outlet 24 are in communication with each other through the second channel 29. And, the third inlet 27 and the outlet 24 are in communication with each other through the third channel 30.

The first channel 28 communicating the first inlet 25 and the outlet 24 with each other, and the third channel 30 communicating the third inlet 27 and the outlet 24 with each other extend in a circular arc shape along an outer edge part (an outer edge part in a radial direction) of the channel main body 22. Then, the second channel 29 communicating the second inlet 26 and the outlet 2 with each other is provided with areas 32, 33 and 34. Here, the area 32 extends from the second inlet 26 in a circular arc shape along an outer edge part of the channel main body 22 (an outer edge part in a radial direction), and the area 33 extends in a radial direction. And, the area 34 extends in a circular arc shape in an inner area, in a radial direction, of the first channel 28 or the third channel 30.

In FIG. 2, a tip portion of the outlet 24 of the channel main body 22 is formed in a tapered shape. And, on an outer edge portion (an outer edge portion in a radial direction) is formed a lip 31 projecting outward in a radial direction.

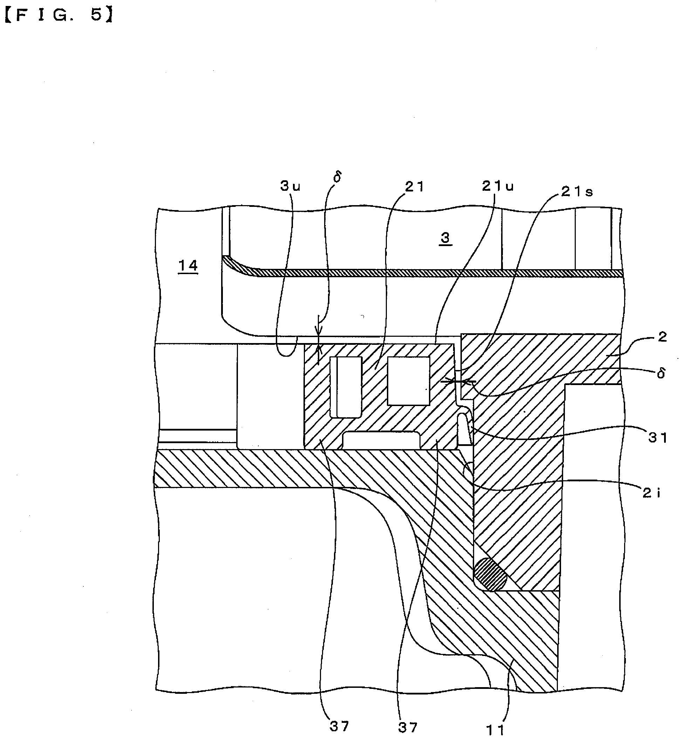

In FIG. 3, on the channel main body 22 is formed a projection 35 for positioning. And, as shown in FIG. 5, on a rear face side (sides not indicated in FIGs. 2, 3; the lower portion of FIG. 5) of the channel main body 22 mounted leg portions 37.

As described above, the outlet 24, the first inlet 25, the second inlet 26 and the third inlet 27 are formed on the lid plate 23 also.

Then, in the same manner as explained on the channel main body 22 with reference to FIG. 3, in FIGs. 2 and 4, the first inlet 25 is formed at a position where its center angle becomes 90° in relation to the outlet 24 counterclockwise, the second inlet 26 is formed at a position where its center angle becomes 180°, and the third inlet 27 is formed at a position where its center angle becomes 270°. Then, a tip portion of the outlet 24 is formed in a tapered shape. In FIGs. 2 and 4, at a location of the channel main body 22 corresponding to the projections 35 (shown in FIG. 3) are drilled through holes 36.

When assembling the flow channel member 21, to the channel main body 22 is positioned the lid plate 23 and fixed thereto to integrate the both. For a method of fixing the channel main body 22 and the lid plate 23 with each other are applicable bonding, welding and other known techniques. When positioning the lid plate 23 to the channel main body 22, engaging the projection 35 of the channel main body 22 with the through hole 36 of the lid plate 23 allows accurately position the channel main body 22 and the lid plate 23 with each other.

The flow channel member 21 is disposed in the discharge area 14 of the main body casing 1, and the outlet 24 of the flow channel member 21 is made to be positioned in the discharge port 4. Then, to the main body casing 1 is attached a lid 11. As shown in FIG. 5, in the flow channel member 21 mounted in the discharge area 14, the leg portions 37 thereof abut the lid 11, and the lip 31 of the flow channel member 21 abuts an inner wall face 2i of the main body casing 2.

Here, in the discharge area 14, an outer peripheral surface (an outer peripheral surface in a radial direction) 21s of the flow channel member 21 is apart from the inner wall face 2i of the main body casing 2 at a prescribed distance δ. In other words, an outer dimension of the flow channel member 21 is set to be smaller than an inner dimension (in an inner wall face 2i) of the main body casing 2 by a distance 2δ.

As shown in FIG. 5, the leg portions 37 of the flow channel member 21 can abut the lid 11, and the lip 31 can abut the main body casing 2, so that resiliency of the lip 31, and depression by the lid 11 allow the flow channel member 21 to be sustained on the inner wall face of the discharge area 14. With this, after assembled in the flowmeter 1, relational movement of the flow channel member 21 to the main body casing 2 is suppressed. Then, even if the flow channel member 21 shrunk by fuel oil, the resiliency of the lip 31 would prevent rattling of the flow channel member 21. In addition, since the prescribed distance δ and the lip 31 is provided, even if resinic material, which is the material of the flow channel member 21, swelled by fuel oil, it would be possible to correspond to this problem.

In the embodiment show in the drawings, action obtained by mounting the flow channel member 21 will be explained below.

When verified at factories, installed at filling stations, after repaired and so on, in the flowmeter 1 is not filled fuel oil, that is, the flowmeter 1 is "empty". Then, a fuel oil flows for the first time, which causes an air in the flowmeter 1 to be squeezed out of the flowmeter 1. After the flowmeter 1 is filled with the fuel oil, the quantity of the fuel oil is precisely measured.

In conventional flowmeters without the flow channel member 21, when it is installed with the discharge port 4 directing upward, air is smaller in specific gravity in comparison to the fuel oil, so that first flowing of the fuel oil into the flowmeter 1 causes an air in the discharge area 14 to smoothly be discharged from the discharge port 4 out of the flowmeter 1, which prevents an air containing portion from generating in the discharge area 14.

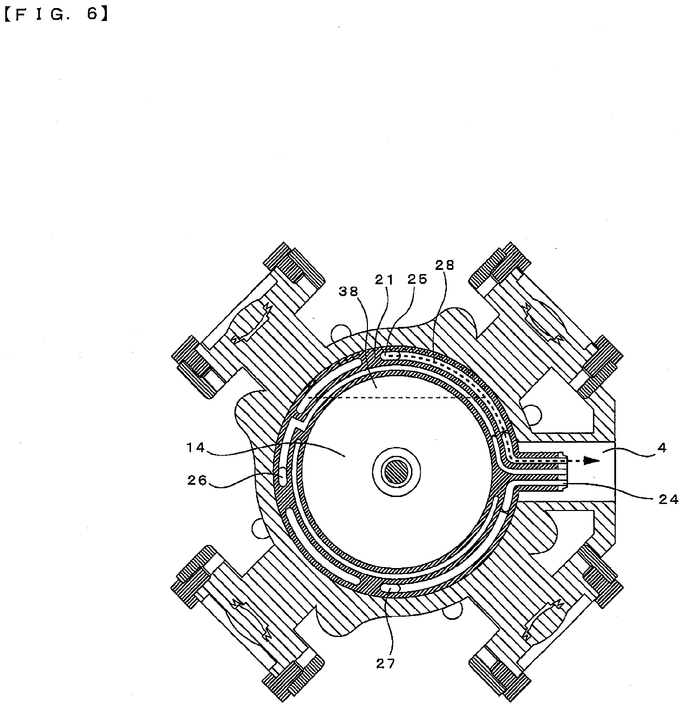

Here, in order to correspond to conditions that filling devices are installed in foreign countries, or improve flexibility in layout, when the discharge port 4 directs in a horizontal direction (the discharge port 4 turns "sideway"), or the discharge port 4 directs vertically downward (the discharge port 4 faces "downward"), as shown in FIGs. 6 to 8, at an upper portions of the discharge area 14 is formed air containing portion 38.

When the air containing portion 38 is formed at the upper portions of the discharge area 14, air is smaller in specific gravity in comparison to the fuel oil, so that it is difficult for the fuel oil flowing through the flowmeter 1 to entrain the air in the air containing portion 38 and to discharge it from the discharge port 4.

When the air containing portion 38 remains in the upper portion of the discharge area 14, circulating quantity at the first flow of fuel oil becomes large, so that it takes long time for default setting. In addition, the existence of the air containing portion 38 in the flowmeter 1 may cause so-called "jumping" phenomenon in which at the next driving of a fueling pump not shown, a compressed air in the air containing portion 38 is measured and displayed in a display not shown in spite of before filling.

In the embodiments introduced with the drawings, one of the first to third inlets 25 to 27 of the flow channel member 21 positions in the air containing portion 38 in the discharge area 14, and the air in the air containing portion 38 is discharged through the first to third channels 28 to 30 from the outlet 24 to the discharge port 4 of the flowmeter 1. Therefore, the air containing portion 38 does not remain in the upper portion of the discharge area 14, which prevents circulating quantity from increasing. As a result, the jumping can be prevented.

More precisely, for example as shown in FIG. 6, when the discharge port 4 directs right side, the air containing portion 38 in an upper portion of the discharge area 14 is in communication with the discharge port 4 via the first inlet 25, the first channel 28 and the outlet 24. Then, when a fuel oil flows, the pressure in the discharge area 14 is higher than that of the discharge port 4, and the pressure in the air containing portion 38 is higher than that of the discharge port 4, so that the air in the air containing portion 38 flows to discharge port 4 due to the difference in the pressure.

Here, the outlet 24 of the flow channel member 21 is formed to be a tapered shape, the fuel oil smoothly flows through an area downstream of the outlet 24, so that the stream (of the fuel oil) is not separated. Then, preventing separation of the stream downstream of the outlet 24 prevents difference in pressure between the area downstream of the outlet 24 and the discharge area 14 due to the separation from decreasing, resulting in smooth discharge of the air in the air containing portion 38.

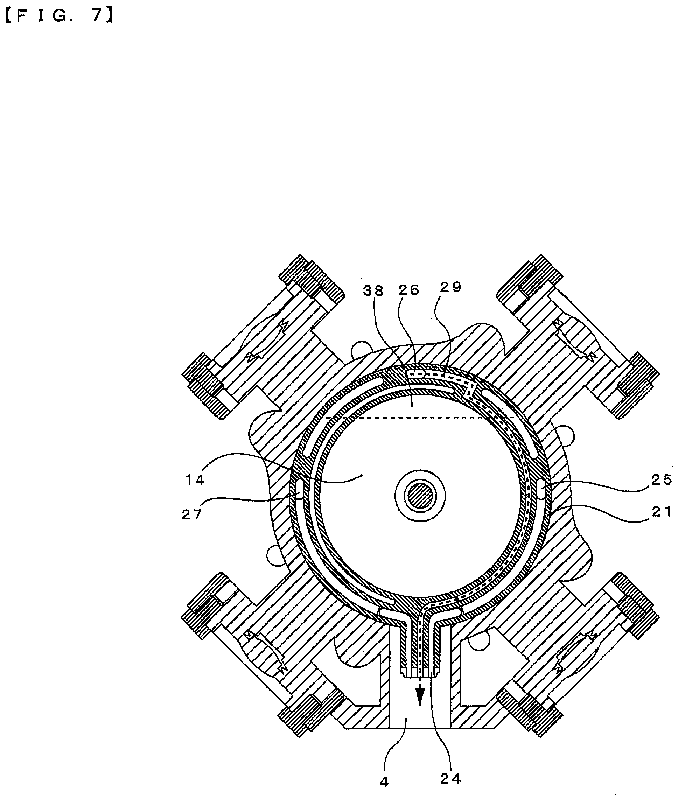

Further, as shown in FIG. 7, when the discharge port 4 directs downward, the air containing portion 38 in an upper portion of the discharge area 14 is in communication with the discharge port 4 via the second inlet 26, the second channel 29 and the outlet 24. Then, since the pressure in the discharge area 14 becomes higher than that of the discharge port 4, when the fuel oil flows, the air in the air containing portion 38 smoothly flows to discharge port 4.

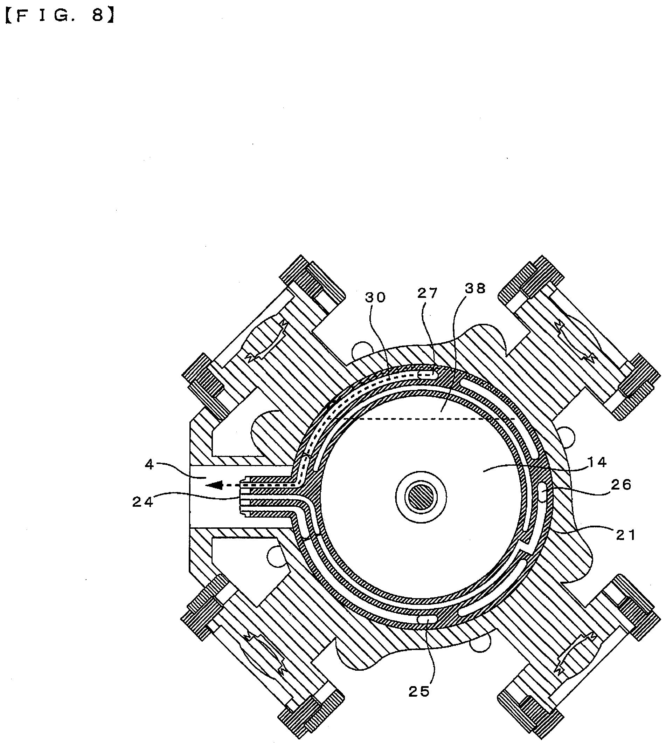

Still further, as shown in FIG.8, when the discharge port 4 directs left side, the air containing portion 38 in an upper portion of the discharge area 14 is in communication with the discharge port 4 via the third inlet 27, the third channel 30 and the outlet 24. Then, in the same manner as stated above with reference to FIGs. 6 and 7, the air in the air containing portion 38 smoothly flows to the discharge port 4.

Since the air in the air containing portion 38 in the upper portion of the discharge area 14 smoothly flows to the discharge port 4, with the embodiments shown in the drawings, circulating quantity at the first flow of fuel oil becomes small, resulting in decreased time for default setting. In addition, the air in the air containing portion 38 in the flowmeter 1 is immediately discharged, which eliminates a possibility that the jumping is generated.

Then, as shown in FIGs. 6 to 8, even if the discharge port 4 directs in a direction other than upward (for instance rightward, downward and leftward), mounting the flow channel member 21 allows the air in the air containing portion 38 in an upper portion of the discharge area 14 to smoothly be discharged to the discharge port 4, so that flexibility of the layout of the flowmeter 1 increases and it becomes possible to securely handle a request such as corresponding to conditions that filling devices are installed in foreign countries. In addition, with a single flow channel member 21, it becomes possible to deal with cases where the discharge port 4 directs rightward (FIG. 6), downward (FIG. 7) and leftward (FIG. 8), so that it is unnecessary to add plural kinds of parts, resulting in no increases in costs for manufacturing and managing the parts.

The embodiments shown in the drawings are just examples, and they are not described to limit technical scope of the present invention. For example, in the embodiments shown in the drawings, although the flowmeter of the present invention is assembled in oil filling devices, the flowmeter of the present invention is not applied only to the oil filling devices, but can be applied to use of liquid measurement, for instance channel systems in factories and so on.

### Description of the Reference Numeral

1 flowmeter
2 main body casing
4 discharge port
11, CI, C2 lids
14 discharge area
21 annular flow channel member
22 channel main body
23 lid plate
24 outlet
25 first inlet
26 second inlet
27 third inlet
28 first channel
29 second channel
30 third channel
31 lip
38 air containing portion

## Claims

1. A flowmeter (1) for metering fuel oil, with:
a main body casing (2), wherein a discharge area (14) is formed in the main body casing (2), and wherein fuel oil measured in a cylinder chamber (3) of the flowmeter (1) can be pressed and discharged from a discharge port (4) via the discharge area (14),
an annular flow channel member (21) disposed between the discharge area (14) and the discharge port (4),
an inlet (25, 26, 27) of said annular flow channel member (21) formed at an upper portion in the main body casing (2),
an outlet (24) of said annular flow channel member (21) formed at a position of the discharge port (4),
**characterized in that**
the annular flow channel member (21) is configured to release an air from the discharge area (14),
on said annular flow channel member (21) are formed a first inlet (25) at a position where a center angle becomes 90° in relation to the outlet (24) counterclockwise, a second inlet (26) at a position where the center angle becomes 180°, and a third inlet (27) at a position where the center angle becomes 270°, wherein the center angle is formed between the outlet (24), a virtual center point (O) of the annular flow channel member (21), and the first, second or third inlet (25, 26, 27), respectively; and
first to third channels (28, 29, 30) communicating the first to third inlets (25, 26, 27) with the outlet (24), respectively, are formed.

2. The flowmeter (1) as claimed in claim 1, wherein said outlet (24) of the annular flow channel member (21) is formed in a tapered shape.

3. The flowmeter (1) as claimed in claim 1 or 2, wherein the first channel (28) communicating the first inlet (25) and the outlet (24) and the third channel (30) communicating the third inlet (27) and the outlet (24) extend in a circular arc shape along an outer edge part of the annular flow channel member (21), and the second channel (29) communicating the second inlet (26) and the outlet (24) is provided with an area extending from the second inlet (26) in a circular arc shape along an outer edge part of the annular flow channel member (21), an inner area extending in a radial direction and an area extending in a circular arc shape in an inner area, in a radial direction, of the first channel or the third channel (28, 30).

## Patentansprüche

1. Durchflussmesser (1) zur Messung von Brennstofföl, mit:
einem Hauptgehäuse (2), wobei ein Ablassbereich (14) in dem Hauptgehäuse (2) gebildet ist und wobei Brennstofföl, ds in einer Zylinderkammer (3) des Durchflussmessers (1) gemessen wird, ausgehend von einer Ablassöffnung (4) über den Ablassbereich (14) unter Druck gesetzt und abgelassen werden kann,
ein ringförmiges Strömungskanalglied (21), das zwischen dem Ablassbereich (14) und der Ablassöffnung (4) angeordnet ist, einen Einlass (25, 26, 27) des ringförmigen Strömungskanalglieds (21), der an einem oberen Abschnitt im Hauptgehäuse (2) ausgebildet ist,
einen Auslass (24) des ringförmigen Strömungskanalglieds (21), der an einer Stelle der Ablassöffnung (4) ausgebildet ist,
**dadurch gekennzeichnet, dass**
das ringförmige Strömungskanalglied (21) dafür ausgelegt ist, eine Luftmenge aus dem Ablassbereich (14) abzugeben,
am ringförmigen Strömungskanalglied (21) ein erster Einlass (25) an einer Stelle, an der ein Mittelpunktswinkel im Gegenuhrzeigersinn unter Bezugnahme auf den Auslass (24) 90° erreicht, ein zweiter Einlass (26) an einer Stelle, an welcher der Mittelpunktswinkel 180 °C erreicht, und ein dritter Einlass (27) an einer Stelle, an welcher der Mittelpunktwinkel 270° erreicht, ausgebildet sind, wobei der Mittelpunktswinkel zwischen dem Auslass (24), einem virtuellen Mittelpunkt (O) des ringförmigen Strömungskanalglieds (21), und dem ersten, zweiten beziehungsweise dritten Einlass (25, 26, 27) ausgebildet ist; und
erste bis dritte Kanäle (28, 29, 30), die jeweils Verbindungen der ersten bis dritten Einlässe (25, 26, 27) mit dem Auslass (24) herstellen, ausgebildet sind.

2. Durchflussmesser (1) nach Anspruch 1, wobei der Auslass (24) des ringförmigen Strömungskanalglieds (21) in einer sich verjüngenden Form ausgebildet ist.

3. Durchflussmesser (1) nach Anspruch 1 oder 2, wobei sich der erste Kanal (28), der die Verbindung des ersten Einlasses (25) mit dem Auslass (24) herstellt, und der dritte Kanal (30), der die Verbindung des dritten Einlasses (27) mit dem Auslass (24) herstellt, in einer kreisbogenartigen Gestalt entlang eines Außenkantenabschnitts des ringförmigen Strömungskanalglieds (21) erstrecken, und der zweite Kanal (29), der die Verbindung des zweiten Einlasses (26) mit dem Auslass (24) herstellt, mit einem Bereich versehen ist, der sich ausgehend vom zweiten Einlass (26) in einer kreisbogenartigen Gestalt entlang eines Außenkantenabschnitts des ringförmigen Strömungskanalglieds (21) erstreckt, mit einen inneren Bereich, der sich in einer radialen Richtung erstreckt, und mit einem Bereich, der sich in einer kreisbogenförmigen Gestalt in einem inneren Bereich, in radialer Richtung, des ersten Kanals oder des dritten Kanals (28, 30) erstreckt.

## Revendications

1. Débitmètre (1) pour doser du fioul, avec :
un carter de corps principal (2), dans lequel une zone de décharge (14) est formée dans le carter de corps principal (2), et dans lequel le fioul mesuré dans une chambre de cylindre (3) du débitmètre (1) peut être pressé et déchargé à partir d'un orifice de décharge (4) via la zone de décharge (14),
un élément de canal d'écoulement annulaire (21) disposé entre la zone de décharge (14) et l'orifice de décharge (4), une entrée (25, 26, 27) dudit élément de canal d'écoulement annulaire (21) formée au niveau d'une partie supérieure du carter de corps principal (2),
une sortie (24) dudit élément de canal d'écoulement annulaire (21) formée au niveau d'une position de l'orifice de décharge (4),
**caractérisé en ce que**
l'élément de canal d'écoulement annulaire (21) est configuré pour libérer de l'air de la zone de décharge (14),
sur ledit élément de canal d'écoulement annulaire (21) sont formées une première entrée (25) à une position où un angle central devient de 90° par rapport à la sortie (24) dans le sens inverse des aiguilles d'une montre, une deuxième entrée (26) à une position où l'angle central devient de 180° et une troisième entrée (27) à une position où l'angle central devient de 270°, dans lequel l'angle central est formé entre la sortie (24), un point central virtuel (0) de l'élément de canal d'écoulement annulaire (21) et les première, deuxième et troisième entrées (25, 26, 27), respectivement; et
de premier à troisième canaux (28, 29, 30), reliant les première à troisième entrées (25, 26, 27) à la sortie (24), respectivement, sont formés.

2. Débitmètre (1) selon la revendication 1, dans lequel ladite sortie (24) de l'élément de canal d'écoulement annulaire (21) se présente sous une forme effilée.

3. Débitmètre (1) selon la revendication 1 ou 2, dans lequel le premier canal (28) reliant la première entrée (25) et la sortie (24) et le troisième canal (30) reliant la troisième entrée (27) et la sortie (24) s'étendent en forme d'arc de cercle le long d'une partie de bord externe de l'élément de canal d'écoulement annulaire (21), et le deuxième canal (29) reliant la deuxième entrée (26) et la sortie (24) est pourvu d'une zone s'étendant à partir de la deuxième entrée (26) en forme d'arc de cercle le long d'une partie de bord externe de l'élément de canal d'écoulement annulaire (21), une zone interne s'étendant dans une direction radiale et une zone s'étendant en forme d'arc de cercle dans une zone interne, dans une direction radiale, du premier canal ou du troisième canal (28, 30).
